# FASCICULE DE BREVET EUROPEEN

(11) **EP 1 098 780 B1**
(45) Date de publication et mention de la délivrance du brevet: **28.04.2004**
(21) Numéro de dépôt: 99929319.4
(22) Date de dépôt: 28.06.1999
(51) Int. Cl.: B60C 15/00, B60C 15/06

(54) **BOURRELET DE PNEUMATIQUE RADIAL SANS TRINGLE**
RADIALREIFENWULST OHNE WULSTRING
RADIAL TYRE BEAD WITHOUT BEAD CORE

(30) Priorité: 23.07.1998 FR 9809452
(43) Date de publication de la demande: 16.05.2001
(73) Titulaire: Sociéte de Technologie Michelin, 63000 Clermont-Ferrand Cedex 09 (FR); Michelin Recherche et Technique S.A., 1763 Granges-Paccot (CH)
(72) Inventeur: AHOUANTO, Michel, F-63530 Enval (FR); BESTGEN, Luc, F-63140 Chatel-Guyon (FR); PATTERSON, Forrest, F-63000 Clermont-Ferrand (FR)
(74) Mandataire: Diernaz, Christian
(86) Numéro de dépôt international: PCT/EP1999/004462
(87) Numéro de publication internationale: WO 2000/005084

(56) Documents cités:
- EP-A- 0 672 547
- EP-A- 0 823 341
- DE-B- 1 189 400

## Description

L'invention concerne un pneumatique selon le préambule de la revendication 1.

Un tel pneumatique est connu du document EP-A-0 823 341.

La demande de brevet EP-A-672 547 décrit une enveloppe de pneumatique dépourvue de tringle, mais qui comporte un élément annulaire dont la résistance à la traction est notablement inférieure à celle qui serait nécessaire pour une tringle dans une enveloppe connue de même dimension, et au moins une armature de renforcement de bourrelet de deux couches de renfort au contact ou à proximité de l'élément annulaire, l'ensemble de ces couches ayant une résistance à la rupture en traction au moins égale à celle qui serait nécessaire pour une tringle dans une enveloppe connue de même dimension. La résistance mécanique de l'armature de renforcement de bourrelet est donc la contribution essentielle à la résistance mécanique de l'ensemble renforçant de bourrelet constitué par l'élément annulaire et ladite armature, cet ensemble permettant ainsi de remplacer la tringle d'une enveloppe classique.

L'exemple décrit dans la demande européenne montre une armature de renforcement de bourrelet composée d'une part de deux nappes de renfort adjacentes ayant leurs extrémités radialement inférieures respectives au contact de l'élément annulaire et s'étendant radialement au-dessus dudit élément. Une nappe de renfort supplémentaire entoure l'élément annulaire et les deux premières nappes, en formant ainsi deux couches élémentaires appliquées de part et d'autre contre les premières nappes qui sont ainsi disposées en sandwich entre les couches élémentaires, les quatre couches en contact étant alors pratiquement parallèles entre elles.

L'armature de renforcement de bourrelet peut aussi ne comporter que deux couches de renfort, par exemple les premières nappes telles que décrites ci-dessus ou la nappe retournée sur elle-même pour former deux couches. Les deux premières couches peuvent être obtenues en pliant une nappe unique, et on obtient ainsi une armature de renforcement de bourrelet à quatre couches , les dites couches provenant du retournement sur elles-mêmes respectivement de deux nappes

Il a été aussi envisagé des cas où la nappe de carcasse est disposée entre les couches de renfort, la nappe de carcasse s'enroulant directement autour de l'élément annulaire, et les deux nappes de renfort s'enroulant autour de la nappe de carcasse et de l'élément annulaire.

Les éléments de renforcement d'une couche de renfort sont croisés avec les éléments de la ou des couches de renfort adjacentes ou axialement la ou les plus proches, c'est-à-dire que les éléments respectivement de deux couches adjacentes ou axialement les plus proches ne sont pas parallèles entre eux.

Les meilleures solutions en endurance semblent être les solutions ou les couches de renfort de fils ou câbles croisés d'une couche à la suivante sont obtenues par retournement d'une seule nappe sur elle-même. Le repliement ou retournement d'une ou de deux nappes superposées faisant avec la direction circonférentielle des angles compris entre 0° et 10° est une opération délicate. La réalisation d'un pneumatique comportant des bourrelets renforcés de la manière décrite ci-dessus pose encore des problèmes de réalisation, car l'obtention d'une position précise des différents éléments du bourrelet n'est pas satisfaite, les dits éléments étant par trop chahutés lors des étapes de confection, de conformation et de cuisson ; il s'ensuit une irrégularité de la qualité et des propriétés dans les séries de pneumatiques réalisés.

L'objet de l'invention est de proposer une enveloppe de pneumatique du type tel que décrit ci-dessus permettant une fabrication plus aisée et une régularité de propriétés des pneumatiques plus fiable.

Le pneumatique, conforme à l'invention, comportant une armature de carcasse radiale, surmontée radialement d'une armature de sommet, elle-même radialement recouverte d'une bande de roulement réunie à deux bourrelets par l'intermédiaire de deux flancs, ladite armature de carcasse s'étendant d'un bourrelet à l'autre, chaque bourrelet étant dépourvu de tringle d'ancrage, et étant renforcé par une armature ayant une résistance à la rupture en traction, mesurée dans le sens circonférentiel, au moins égale à la résistance nécessaire pour une tringle dans une enveloppe connue de même dimension et comprenant au moins deux nappes repliées sur elles-mêmes pour former quatre couches de renfort axialement proches les unes des autres, lesdites couches comportant chacune des éléments de renfort, parallèles entre eux dans chaque couche et faisant avec la direction circonférentielle un angle α tel que 0° < α ≤ 10°, et ayant leurs extrémités radialement extérieures disposées dans le bourrelet à des hauteurs différentes, de sorte que toute bande annulaire de l'armature de renforcement de bourrelet, comprenant au moins deux couches de renfort comprise entre deux parallèles du pneumatique, soit formée d'au moins deux couches formées d'éléments de renfort croisés d'une couche à la suivante, est caractérisé en ce que les deux couches axialement les plus à l'intérieur sont composées d'éléments parallèles entre eux d'une couche à la suivante, les deux couches axialement au centre de l'armature étant composées d'éléments croisés d'une couche à la suivante..

L'architecture ci-dessus permet, pour la fabrication du pneumatique, l'absence d'un élément annulaire dont la résistance à la rupture en traction dans le sens longitudinal est notablement inférieure à celle qui serait nécessaire pour une tringle dans une enveloppe connue de même dimension, l'axe de cet élément annulaire étant l'axe de révolution de l'enveloppe. Par contre, ledit élément remplit avantageusement par sa présence une autre fonction : celle de remplissage de la partie radialement inférieure du bourrelet, de manière à conférer à ladite partie une largeur axiale compatible avec la largeur du siège de jante sur laquelle sera monté le pneumatique, et compatible avec le serrage sur jante nécessaire pour prévenir toute rotation sur jante.

Bien que le retournement d'armature de carcasse et la partie principale d'armature de carcasse qui lui correspond puissent être axialement compris entre les deux couches d'armature de renforcement axialement intérieures et les deux couches de ladite armature axialement extérieures, il est avantageux que l'armature de carcasse soit enroulée autour de la partie radialement inférieure de l'armature de renforcement de bourrelet, partie formée par le repliement des deux nappes de renfort. Il est aussi possible que le retournement d'armature de carcasse soit inséré entre les deux couches axialement extérieures, alors que la partie principale d'armature de carcasse qui lui correspond soit insérée entre les deux couches axialement intérieures.

Il est de même avantageux que le profilé recouvrant extérieurement au moins axialement le bourrelet, partie dudit profilé ou couche protectrice destinée à rentrer en contact avec la jante au moins dans la région du crochet de jante lorsque l'enveloppe est montée, soit composé d'un mélange caoutchouteux qui, à l'état vulcanisé, a un module dynamique de perte élastique G" inférieur à 1, G" étant exprimé en MPa (mégapascals), ledit module étant mesuré à 10 % de cisaillement, à une température de 50°C, et avec une fréquence de 10 Hz, et ledit profilé ayant une épaisseur au plus égale à 2 mm.

Par élément de renfort des nappes repliées de l'armature de renforcement de bourrelet, il faut entendre aussi bien des fils que des câbles. Un fil peut être constitué par un fil unique monofilamentaire ou multifilamentaire, alors qu'un câble peut être avec une âme centrale ou non. La matière constituant les éléments de renfort peut être variable, elle peut être par exemple métallique, notamment en acier, mais sera de préférence textile, naturel ou synthétique, tel que par exemple en matière cellulosique, en polyester ou en polyamide aliphatique et préférentiellement aromatique, notamment des fils en aramide ; elle peut être aussi minérale, par exemple en verre, en carbone, chaque câble pouvant comporter plusieurs des matières citées (câbles dits mixtes).

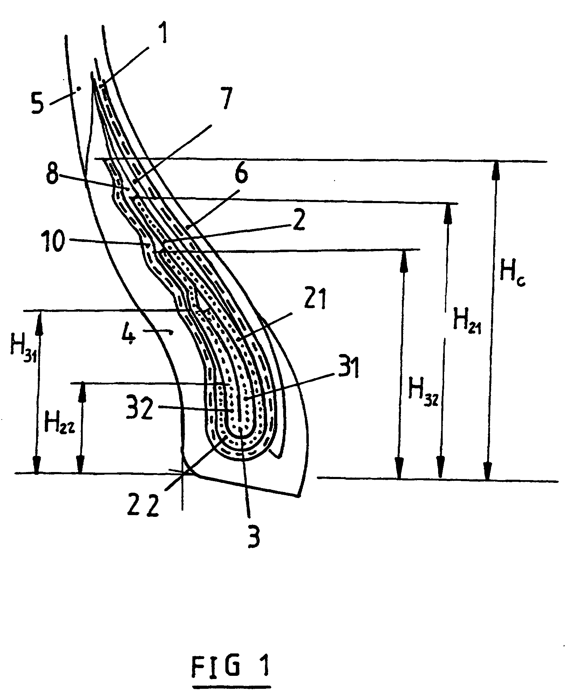

Les caractéristiques de la présente invention apparaîtront plus clairement à la lecture de la description qui suit et à laquelle est annexé le dessin sur lequel :
* la figure 1 représente schématiquement, vu en section méridienne, le bourrelet d'un pneumatique conforme à l'invention,
* la figure 2 représente schématiquement une deuxième variante de bourrelet conforme à l'invention,
* la figure 3 représente schématiquement une troisième variante conforme à l'invention,
Le pneumatique, de Tourisme dans les exemples décrits, conforme à l'invention, comporte une armature de sommet (non montrée) composée, de façon connue, d'au moins deux nappes de sommet d'éléments de renforcement métalliques ou textiles, parallèles entre eux dans chaque nappe et croisés d'une nappe à la suivante en faisant avec la direction circonférentielle des angles pouvant être compris entre 0° et 30°. Ladite armature est radialement surmontée d'une bande de roulement, réunie aux bourrelets B par deux flancs (5). L'armature de carcasse radiale (1) (figure 1), composée dans l'exemple décrit d'une seule nappe de câbles textiles (en polyester) et s'étendant d'un bourrelet B à l'autre, est telle que ses bords soient repliés sur eux-mêmes dans chaque bourrelet B pour former un retournement (10) de chaque côté du plan équatorial. Ladite armature de carcasse (1) n'est pas enroulée autour d'une tringle qui n'existe pas, mais enroulée autour de la partie radialement inférieure d'une armature de renforcement R de bourrelet B.

Ladite armature de renforcement R est composée de deux nappes (2) et (3) d'éléments de renforcement textiles et plus précisément de câbles en polyamide aromatique. La première nappe (2) est repliée sur elle-même pour former deux couches : une couche axialement intérieure (21) et une couche axialement extérieure (22). La deuxième nappe (3) est, de la même manière repliée sur elle-même pour former deux couches (31) et (32), la couche (31) étant axialement adjacente à la couche (21) de la première nappe (2) et la couche (32) étant axialement adjacente à la couche (22). Dans chaque nappe (2, 3) de renfort, les câbles de polyamide aromatique sont parallèles entre eux et forment un angle aigu α avec la direction circonférentielle, c'est-à-dire un angle déterminé en un point quelconque du fil entre la direction de ce fil et la tangente à un cercle ayant pour axe l'axe de révolution de l'enveloppe et passant par ce point. Pour chaque couche (21, 22, 31, 32) l'angle α varie en fonction de la position radiale du point de mesure, mais il est toujours supérieur à 0° et au plus égal à 10°.

Les nappes (2) et (3) sont disposées sur le tambour de confection de l'ébauche d'armature de renforcement de bourrelet ou de l'armature de carcasse de manière à ce que, après retournement des dites deux nappes; les couches axialement intérieures (21) et (31) soient formées de câbles non seulement parallèles entre eux dans chaque couche, mais en outre parallèles entre eux d'une couche (21) à la couche axialement adjacente à ou la plus proche de la suivante (31). Alors que les câbles des deux couches (21, 22) ou (31, 32) d'une même nappe (2) ou (3) sont croisés entre eux d'une couche (21, 31) à l'autre (22, 32) de la même nappe, les câbles des deux couches axialement extérieures (22) et (32) respectivement des deux nappes (2) et (3) sont parallèles entre eux d'une couche (22) à la couche axialement adjacente ou la plus proche (32).

Entre la nappe carcasse (1) et l'ensemble R sont disposées deux profilés caoutchouteux de faible épaisseur (7) et (8), dits profilés de découplage, le profilé (7) assurant le découplage entre la couche (21) et la partie principale d'armature de carcasse ( 1 ) alors que le profilé (8), réduit, dans le cas décrit, à une couche de gomme d'épaisseur sensiblement uniforme, assure le découplage entre les couches de renfort (22, 31, 32) et le retournement (10) de nappe de carcasse (1). La (les) valeur(s) du (des) module(s) sécant(s) MA10 des gommes (7) et (8) est (sont) de préférence comprise(s) entre la valeur du module MA10 de la gomme de calandrage des éléments de renforcement de l'armature de carcasse et la (les) valeur(s) du (des) module(s) MA10 de la (des) gomme(s) de calandrage des éléments des couches de renfort (21, 22, 31, 32), qui lui est (sont) très nettement supérieure(s).

Il faut entendre par module MA10 le module qui résulte, pour un mélange de caoutchouc donné, de la mesure de la contrainte de traction pour un allongement relatif de 10 %, cette contrainte étant déterminée conformément à la norme AFNOR-NF-T46-002 de septembre 1988, dans les conditions normales de température et d'hygrométrie selon la norme AFNOR-NF-T40-101 de décembre 1979.

Les extrémités radialement supérieures des couches de renfort (21, 22, 31, 32) sont disposées à des hauteurs H₂₁, H₂₂, H₃₁, H₃₂ différentes; les dites hauteurs étant mesurées par rapport à la droite parallèle à l'axe de rotation du pneumatique passant par le point d'intersection entre la paroi du bourrelet sensiblement perpendiculaire à l'axe de rotation et la génératrice du siège de bourrelet. Comme on peut le voir sur la figure 1, les hauteurs ci-dessus sont telles que, sur une bande annulaire de renforcement où existent au moins deux couches de renforts (21) et (32), et en particulier sur la bande où n'existent que deux couches de renfort, les dites deux couches sont constituées d'éléments de renforcement croisés d'une couche à la suivante, la rigidité de l'ensemble R étant encore très importante dans le cas de la présence de deux couches croisées. L'arrangement des extrémités des différentes couches de renfort permet le maintien de la rigidité circonférentielle de tension et de la résistance à la rupture par traction nécessaires au remplacement de la tringle usuelle d'un pneumatique de même dimension, tout en permettant, du fait que les deux nappes de renfort soient posées, lors de la confection de l'ébauche d'armature de renforcement avec des éléments parallèles d'une nappe à la suivante, une plus grande facilité de fabrication qui se traduit par un meilleur respect des coordonnées de positionnement des produits constituant le bourrelet. Quant à la valeur de la hauteur H_{C} du retournement (10) de la nappe de carcasse (1), elle est, dans l'exemple décrit, supérieure à toutes les valeurs citées ci-dessus, le retournement (10) recouvrant axialement toutes les extrémités de couches (21, 22, 31, 32) et ayant ainsi un bord axialement adjacent à la partie principale de la nappe de carcasse.

La structure du bourrelet est complétée d'une part par une couche (6) de revêtement intérieur, et d'autre part par un profilé caoutchouteux (4) de protection de bourrelet. La couche de protection (4) a, à l'état vulcanisé, un module dynamique de perte élastique G" inférieur àl, G" étant exprimé en Mpa (mégapascals) ; dans le cas décrit, ce module G" est égal à 0,08 Mpa, et donc faible par rapport au module des profilés correspondants de bourrelets classiques à tringles conventionnelles, module généralement au moins égal à 1. Quant à l'épaisseur du dit profilé (4), elle est égale à 1,5 mm au niveau du crochet de jante. L'utilisation d'un profilé (4) à faible module de perte élastique G" et de faible épaisseur dans la zone extérieure du bourrelet, permise grâce à la rigidité de l'armature de renforcement R qui s'étend sur toute la région du bourrelet, conduit à une diminution notable de la résistance au roulement sans altérer d'aucune manière la qualité de maintien de l'enveloppe sur la jante.

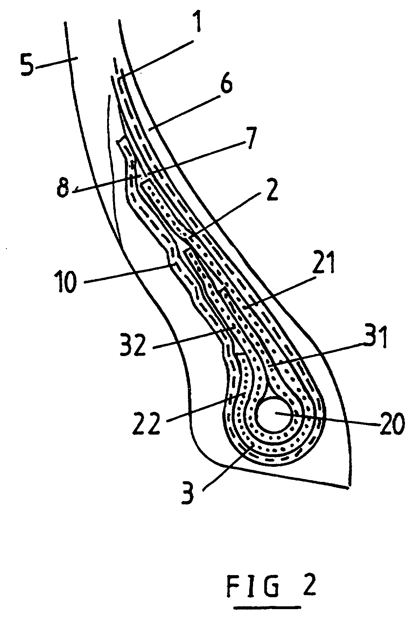

Sur la figure 2 est montrée une variante utilisant un élément annulaire tel que décrit dans la demande européenne citée en référence. Les nappes (2) et (3) de renfort sont enroulées autour dudit élément annulaire (20) pour former d'une part les deux couches axialement intérieures (21) et (31) et d'autre part les couches (22) et (32) axialement extérieures, les autres caractéristiques d'architecture du bourrelet étant identiques à celles décrites précédemment et relatives au bourrelet montré sur la figure 1, la nappe de carcasse (1) s'enroulant autour de l'armature de renforcement R et donc autour de l'élément annulaire (20).

L'élément annulaire (20) a une résistance à la rupture en traction, mesurée dans le sens circonférentiel, avantageusement inférieure à 300 daN, c'est-à-dire très notablement inférieure à celle qui serait nécessaire pour une tringle dans une enveloppe connue de même dimension, et l'armature R des nappes de renfort a une résistance à la rupture en traction, mesurée dans le sens circonférentiel, au moins égale à celle qui serait nécessaire pour une tringle dans une enveloppe connue de même dimension, c'est-à-dire, pour l'exemple décrit d'un pneumatique de Tourisme, avantageusement supérieure à 1000 daN, la résistance mécanique de l'élément annulaire (20) ne contribuant pas nécessairement à la résistance mécanique de l'ensemble R. Cependant, cette résistance à la rupture en traction sera choisie de façon à permettre les opérations usuelles de confection, de retroussage, de conformation et de vulcanisation du pneumatique. L'élément annulaire (20) peut être ainsi constitué par exemple par un fil circulaire, l'axe de ce cercle étant l'axe de révolution de l'enveloppe. Ledit fil peut être filamentaire ou multifilamentaire, il peut être textile ou métallique et sera constitué de manière à être le plus léger possible ; un fil métallique creux est une solution préférentielle car concilie les deux propriétés recherchées de légèreté et d'encombrement. L'élément annulaire (20) peut aussi être un câble en matière textile, par exemple en polyamide aromatique, ou en matière minérale, par exemple en verre. Il peut aussi être remplacé par un profilé de mélange caoutchouteux à fort module sécant d'élasticité en tension et de très grande dureté : par exemple un mélange de module MA 10 supérieur à 15 MPa à 10 % d'allongement relatif convient parfaitement. Ledit profilé peut n'être qu'un appoint à l'élément annulaire constitué par un fil, câble ou ruban, en vue d'un remplissage plus important du bourrelet.

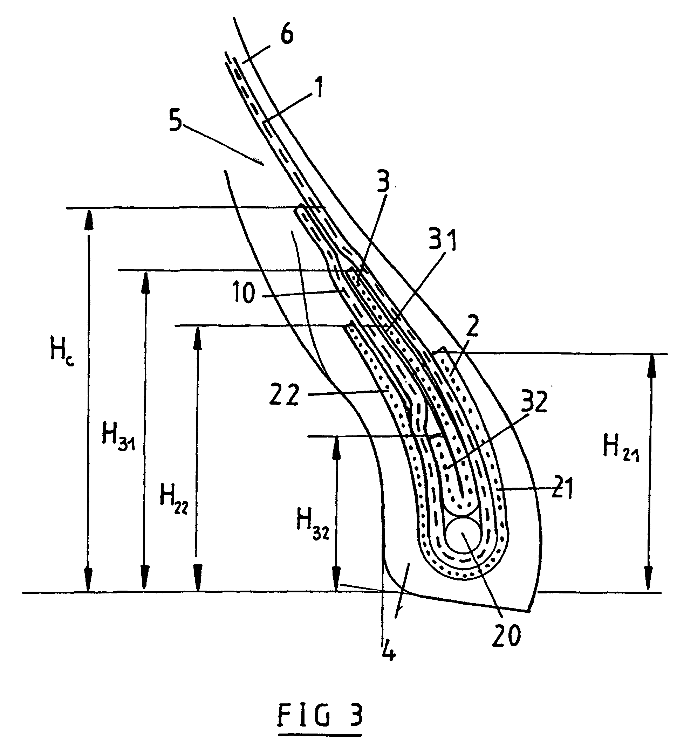

Le bourrelet de pneumatique montré sur la figure (3) diffère du bourrelet montré sur la figure 2 et décrit précédemment par les trois caractéristiques que sont :
- la position de l'élément annulaire (20) par rapport aux couches de renforcement
- les positions radiales respectives des extrémités radialement supérieures des couches de renfort (21, 22, 31, 32),
- la position axiale de la nappe de carcasse par rapport aux couches de renfort. La deuxième nappe de renfort (3) n'est pas enroulée autour de l'élément annulaire (20), mais est simplement repliée sur elle-même pour former les couches (31) et (32), alors que la première nappe (2) est enroulée autour dudit élément annulaire. Alors que la suite des valeurs de hauteurs d'extrémités de couches de renforcement, relatives à l'exemple montré sur la figure 1, s'écrivait dans un ordre croissant : H 22, H 31, H 32, H 21, l'exemple de la figure 3 conduit à la suite H 32, H 21, H 22, H 31. Par ailleurs, la nappe de carcasse (1), retournée autour de l'anneau (20), est prise en sandwich entre les deux nappes (2) et (3) elles aussi retournées, la partie principale de la nappe étant insérée entre les couches (21) et (31) et le retournement (10) de la nappe de carcasse étant insérée entre les couches (22) et (32). Une telle disposition, tout en conservant les propriétés de rigidité à la tension de l'armature R, tout en améliorant la précision des positions de constituants du pneumatique et ainsi en obtenant une meilleure régularité de la qualité des pneumatiques fabriqués, permet en outre de positionner l'armature de carcasse près de la fibre neutre du complexe formé par les deux armatures de carcasse et de renforcement de bourrelet, et de limiter ainsi le passage en compression de l'armature de carcasse dans la zone de bourrelet lors du passage dans l'aire de contact.

Chaque bord de l'armature de carcasse (1) peut aussi être inséré entre les couches de renfort axialement intérieures et les couches axialement extérieures (non montré). Deux cas de structure peuvent se présenter : soit le bord de ladite armature est replié pour former un retournement, la partie principale et le retournement étant alors axialement compris entre les dites couches, soit le bord n'est pas replié et donc sans retournement.

## Revendications

1. Pneumatique comportant une armature de carcasse radiale (1), surmontée radialement d'une armature de sommet, elle-même radialement recouverte d'une bande de roulement réunie à deux bourrelets B par l'intermédiaire de deux flancs (5), ladite armature de carcasse (1) s'étendant d'un bourrelet B à l'autre, chaque bourrelet B étant dépourvu de tringle d'ancrage et étant renforcé par une armature R, ayant une résistance à la rupture en traction, mesurée dans le sens circonférentiel, au moins égale à la résistance nécessaire pour une tringle dans une enveloppe connue de même dimension, et comprenant au moins deux nappes (2) et (3) repliées sur elles-mêmes pour former quatre couches de renfort (21, 31, 32, 22) axialement proches les unes des autres, lesdites couches (21, 31, 32, 22) comportant chacune des éléments de renfort, parallèles entre eux dans chaque couche et faisant avec la direction circonférentielle un angle α tel que 0° < α ≤ 10°, et ayant leurs extrémités radialement extérieures disposées dans le bourrelet B à des hauteurs H₂₁, H₂₂, H₃₁, H₃₂ différentes, de sorte que toute bande annulaire de l'armature de renforcement R de bourrelet B, comprenant au moins deux couches de renfort et comprise entre deux parallèles du pneumatique, soit formée d'au moins deux couches formées d'éléments de renfort croisés d'une couche à la suivante, **caractérisé en ce que** les deux couches axialement les plus à l'intérieur (21, 31) sont composées d'éléments parallèles entre eux d'une couche (21) à la suivante (31), les deux couches (31, 32) axialement au centre de l'armature étant composées d'éléments croisés d'une couche (31) à la suivante (32).

2. Pneumatique selon la revendication 1, **caractérisé en ce que** le bourrelet B comprend un élément annulaire (20), dont la résistance à la rupture en traction dans le sens circonférentiel est notablement inférieure à la résistance à la rupture en traction, mesurée dans le même sens, de l'armature de renforcement R, l'axe dudit élément annulaire (20) étant l'axe de révolution du pneumatique.

3. Pneumatique selon l'une des revendications 1 ou 2, **caractérisé en ce que** chaque bord d'armature de carcasse (1), qu'il soit avec retournement (10) ou sans retournement (10), est axialement compris entre les deux couches axialement intérieures et les deux couches axialement extérieures.

4. Pneumatique selon l'une des revendications 1 à 2, **caractérisé en ce que** l'armature de carcasse (1) est enroulée autour de l'extrémité radialement inférieure de l'armature de renforcement R de bourrelet B.

5. Pneumatique selon l'une des revendications 1 ou 2 **caractérisé en ce que** le retournement (10) d'armature de carcasse (1) est inséré entre les deux couches axialement extérieures , alors que la partie principale d'armature de carcasse qui lui correspond est insérée entre les deux couches axialement intérieures.

6. Pneumatique selon l'une des revendications 1 à 5, **caractérisé en ce que** le profilé (4) recouvrant extérieurement au moins axialement la partie du bourrelet destinée à rentrer en contact avec la jante, au moins dans la région du crochet de jante lorsque l'enveloppe est montée, est composé d'un mélange caoutchouteux qui, à l'état vulcanisé, a un module dynamique de perte élastique G" inférieur à 1, G" étant exprimé en MPa (mégapascals), ledit module étant mesuré à 10 % de cisaillement, à une température de 50°C, et avec une fréquence de 10 Hz, ledit profilé ayant une épaisseur au plus égale à 2 mm.

## Patentansprüche

1. Reifen, der eine radiale Karkassenbewehrung (1) aufweist, radial über der eine Scheitelbewehrung montiert ist, die ihrerseits radial von einer Lauffläche abgedeckt ist, die mit zwei Wülsten B mittels zweier Flanken (5) vereint ist, wobei sich die genannte Karkassenbewehrung (1) von einem Wulst B zum anderen erstreckt, kein Wulst B mit einem Verankerungs-Wulstkern versehen ist, und jeder Wulst durch eine Bewehrung R verstärkt ist, die bei Zug eine Reißbeständigkeit aufweist, die, im Umfangsrichtung gemessen, mindestens gleich ist der Beständigkeit, die für einen Wulstkern in einem bekannten Mantel gleicher Abmessung erforderlich ist, und mindestens zwei Lagen (2) und (3) aufweist, die auf sich selbst umgefaltet sind, um vier Verstärkungsschichten (21, 31, 32, 22) zu bilden, die axial einander naheliegen, wobei die genannten Schichten (21, 31, 32, 22) jeweils Verstärkungselemente aufweisen, die in jeder Schicht zueinander parallel sind und zur Umfangsrichtung einen Winkel α aufweisen, mit 0° < α ≤ 10°, und wobei ihre radial äußeren Enden im Wulst B unter unterschiedlichen Höhen H₂₁, H₂₂, H₃₁, H₃₂ angeordnet sind, so daß das gesamte ringförmige Band der Verstärkungsbewehrung R des Wulstes B, das mindestens zwei Verstärkungsschichten aufweist und zwischen zwei Parallelkreisen des Reifens liegt, aus mindestens zwei Schichten gebildet ist, die aus Verstärkungsschichten gebildet sind, die von einer Schicht zur folgenden überkreuz liegen, **dadurch gekennzeichnet ist, daß** die beiden axial am weitesten innenliegenden Schichten (21, 31) aus Elementen zusammengesetzt sind, die, von einer Schicht (21) zur folgenden (31), zueinander parallel sind, wobei die beiden Schichten (31, 32), die axial in der Mitte der Bewehrung liegen, aus zwei Elementen zusammengesetzt sind, die von einer Schicht (31) zur folgenden (32) überkreuz liegen.

2. Reifen nach Anspruch 1, **dadurch gekennzeichnet, daß** der Wulst B ein ringförmiges Element (20) aufweist, dessen Reißbeständigkeit bei Zug in Umfangsrichtung erheblich geringer ist als die Reißbeständigkeit bei Zug der Verstärkungsbewehrung R, gemessen in der selben Richtung, wobei die Achse des genannten, ringförmigen Elements (20) die Drehachse des Reifens ist.

3. Reifen nach einem der Ansprüche 1 oder 2, **dadurch gekennzeichnet, daß** jeder Rand der Karkassenbewehrung (1), ob mit Umschlag (10) oder ohne Umschlag (10), axial zwischen den beiden axial inneren Schichten und den beiden axial äußeren Schichten aufgenommen ist.

4. Reifen nach einem der Ansprüche 1 bis 2, **dadurch gekennzeichnet, daß** die Karkassenbewehrung (1) um das radial untere Ende der Verstärkungsbewehrung R des Wulstes B herumgewickelt ist.

5. Reifen nach einem der Ansprüche 1 oder 2, **dadurch gekennzeichnet, daß** der Umschlag (10) der Karkassenbewehrung (1) zwischen die beiden axial äußeren Schichten eingeführt ist, während der Hauptteil der Karkassenbewehrung, der diesem entspricht, zwischen die beiden axial inneren Schichten eingeführt ist.

6. Reifen nach einem der Ansprüche 1 bis 5, **dadurch gekennzeichnet, daß** das Profil (4), das außen mindestens axial den Teil des Wulstes abdeckt, der dazu bestimmt ist, mindestens im Bereich der Felgenumstülpung in Berührung mit der Felge zu treten, wenn der Mantel montiert ist, aus einer gummiartigen Mischung zusammengesetzt ist, die im vulkanisierten Zustand ein dynamisches Modul des elastischen Verlustes G" aufweist, das kleiner ist als 1, wobei G" in MPa (Megapascal) ausgedrückt ist, wobei das genannte Modul bei 10% Scherung, bei einer Temperatur von 50°C und einer Frequenz von 10 Hz gemessen wird, und das genannte Profil eine Dicke aufweist, die höchstens 2 mm beträgt.

## Claims

1. Tyre comprising a radial carcass reinforcement (1) overlaid radially by a crown reinforcement itself radially covered by a tread connected via two side walls (5) to two beads B, each of which has no anchoring bead wire, and with the said carcass reinforcement (1) extending from one bead B to the other,
**characterised in that**
each bead is reinforced by an armature R comprising at least two plies (2) and (3) turned up over themselves to form four reinforcement layers (21, 31, 32, 22) axially close to one another, each of the said layers comprising reinforcement elements parallel to one another within each layer and making with the circumferential direction an angle α such that 0° < α < 10°, the two axially innermost layers (21, 31) being composed of elements parallel to one another from one layer (21) to the next (31), and the two layers (31, 32) axially at the centre of the armature being composed of elements crossed from one layer (31) to the next (32), such that the combination R of reinforcement layers has a tensile rupture strength measured in the circumferential direction at least equal to the strength necessary for a bead wire in a known type of the same size, and the reinforcement layers (21, 22, 31, 32) have their radially outer ends positioned within the bead at different heights H₂₁, H₂₂, H₃₁, H₃₂, such that any annular strip of the reinforcement annature R of the bead B, comprising at least two layers of reinforcement elements and lying between two parallels of the tyre, is formed of at least two layers of reinforcement elements crossed from one layer to the next.

2. Tyre according to Claim 1, **characterised in that** the bead B comprises an annular element (20) whose tensile rupture strength in the circumferential direction is considerably less than the tensile rupture strength, measured in the same direction, of the reinforcement armature R, the axis of the said annular element (20) being the rotation axis the tyre.

3. Tyre according to either of Claims 1 or 2, **characterised in that** each edge of the carcass reinforcement (1), whether with or without a turn-up (10), is held axially between the two axially internal layers and the two axially external layers.

4. Tyre according to either of Claims 1 or 2, **characterised in that** the carcass reinforcement (1) is wrapped around the radially lower end of the reinforcement armature R of the bead B.

5. Tyre according to either of Claims 1 or 2, **characterised in that** the turn-up (10) of the carcass reinforcement (1) is inserted between the two axially external layers, while the main portion of the carcass reinforcement corresponding to it is inserted between the two axially internal layers.

6. Tyre according to any of Claims 1 to 5, **characterised in that** the section (4) that covers externally and at least axially the part of the bead designed to come into contact with the mounting rim, at least in the area of the rim hook when the tyre is fitted, consists of a rubber mix which, in the vulcanised condition, has a dynamic elastic loss modulus G" less than 1, G" being expressed in MPa (megapascals), the said modulus being measured at 10% shear, at a temperature of 50°C and with a frequency of 10 Hz, the thickness of the said section being at most equal to 2 mm.
